# EUROPÄISCHE PATENTSCHRIFT

(11) **EP 0 419 895 B1**
(45) Veröffentlichungstag und Bekanntmachung des Hinweises auf die Patenterteilung: **29.11.1995**
(21) Anmeldenummer: 90116984.7
(22) Anmeldetag: 04.09.1990
(51) Int. Cl.: H04J 3/06

(54) **Taktversorgung für Multiplexsysteme**
Clocksupply for multiplexsystems
Méthode d'alimentation d'horloge pour les systèmes multiplexes

(30) Priorität: 27.09.1989 DE 3932240
(43) Veröffentlichungstag der Anmeldung: 03.04.1991
(73) Patentinhaber: SIEMENS AKTIENGESELLSCHAFT, 80333 München (DE)
(72) Erfinder: Sarközi, Imre, Dipl.-Ing., D-8000 München 70 (DE)

(56) Entgegenhaltungen:
- EP-A- 0 263 377
- FR-A- 1 553 778
- FR-A- 2 316 674
- US-A- 3 730 994
- US-A- 4 078 153

## Beschreibung

Die Erfindung betrifft eine Taktversorgung für Multiplexsysteme nach dem Oberbegriff des Patentanspruchs 1.

In digitalen Multiplexsystemen ist es erforderlich, neben einem Systemtaktsignal (Bittaktsignal) einzelnen Baugruppen ein Rahmentaktsignal zuzuführen, um eine richtige Zuordnung der einzelnen übertragenen Datenkanäle zu erreichen. Zum Beispiel werden in digitalen Cross-Connect-Multiplexer-Systemen die Digitalsignale in einem zeitschlitzgesteuerten Koppelfeld rangiert. Hierzu wird ein Rahmen mit Zeitschlitzen gebildet, in den die Digitalsignale eingeordnet werden. Die Durchschaltung im Koppelfeld erfolgt synchron, d.h., daß die Ausrichtung der Zeitschlitze der verschiedenen Digitalsignale übereinstimmen muß. Um dies sicherzustellen, ist ein zentral erzeugter Rahmentakt für das System erforderlich. Mit Hilfe des Rahmentaktes werden alle internen Digitalsignalrahmen erzeugt. Gleichzeitig ist ein Laufzeitausgleich zwischen den Digitalsignalen und dem Rahmen mittels Phasenanpassungsschaltungen durchzuführen. Besonders in Systemen mit großer Koppelkapazität stellt sich aufgrund der räumlichen Ausbreitung der Baugruppen (Funktionseinheiten) das Problem, die bestehenden Entfernungen ohne Laufzeitverschiebungen zwischen den System- und Rahmentakten zu überbrücken. Bei hohen Bitraten können die Laufzeiten der Verstärker und Leitungen nicht mehr vernachlässigt werden. Verstärkt gelten diese Schwierigkeiten bei einer Umschaltung von einer Betriebs- auf eine Ersatztaktversorgung mit aus Sicherheitsgründen separat geführten Taktleitungen. Bisher wurden die Systemtakt- und die Rahmentaktleitung mit gleichen Leitungslängen streng parallel geführt, um gleiche Laufzeiten zu erhalten.

Bei höheren Bitraten oder/und großen Verbindungslängen bietet diese Methode aufgrund von Toleranzstreuungen der notwendigen Zwischenverstärker und der Verbindungskabel jedoch keine Gewähr gegen unerwünschte Laufzeitverschiebung.

In dem US-Patent 3,730,994 werden ein zu übertragendes Taktsignal und ein Rahmensignal mit Hilfe eines Abtastsignals mit der doppelten Taktfrequenz in ein ternäres Signal umgesetzt, das übertragen und empfangsseitig in die ursprünglichen Signale aufgeteilt wird.

Bei diesem Verfahren müssen höhere Frequenzen übertragen werden. Die Kombination des resultierenden Signals mit einem Ersatz-Signal wird in der Patentschrift nicht angesprochen.

Aus der US-Patentschrift 4,078,153 ist ein Übertragungssystem für ein Tatksignal und ein Hilfssignal bekannt. Die Impulse des Taktsignals werden durch das Hilfssignal verlängert oder verkürzt. Dieses Verfahren ist bei sehr hohen zu übertragenen Taktfrequenzen nicht geeignet, da sowohl die Übertragung als auch Wiedergewinnung der veränderten Impulse aufgrund der Bauelementelaufzeiten schwierig ist. Auch führen die unterschiedlichen Impulsbreiten zu Phasenschwankungen des wiedergewonnenen Taktsignals.

Aufgabe der Erfindung ist es, eine mit einfachen Mitteln realisierbare Schaltungsanordnung anzugeben, bei der ein Systemtaktsignal und ein Rahmentaktsignal zu einem einzigen übertragenen Taktsignal zusammengefaßt übertragen und wieder separiert werden.

Vorteilhafte Ausbildungen der Erfindung sind in den Unteransprüchen näher erläutert.

Die Übertragung des System- und des Rahmentaktsignals erfolgt als kombiniertes System-Rahmen-Taktsignal über nur eine Taktleitung, die je nach Art der Signalführung aus einer oder zwei Adern bestehen kann. Hierbei kann sich folglich keinerlei laufzeitbedingte Verschiebung zwischen beiden Signalen mehr einstellen. Das Systemtaktsignal wird beispielsweise zu Beginn der Rahmentaktperiode verändert (markiert) und auf den entsprechenden Baugruppen wird eine Erkennungseinrichtung für das Rahmentaktsignal vorgesehen. Die Baugruppen weisen einen eigenen Rahmentaktzähler auf, der durch das Rahmentaktsignal lediglich synchronisiert wird. Da das Rahmentaktsignal nur relativ selten eingeblendet wird, wird auch das Spektrum nur geringfügig verändert. So bleiben auch die störenden Spektralanteile bei der Wiedergewinnung des Systemtaktsignals auf den Baugruppen gering. Eine besonders einfache und vorteilhafte Lösung ist das Ausblenden oder Einblenden von einem oder mehreren Impulsen (beispielsweise der logischen 1) des Systemtaktsignals.

Vorteilhaft ist die Verwendung eines Filters bei der Wiedergewinnung des Systemtaktsignals. Dieses wird vorteilhafter Weise als Schwingkreis ausgebildet und liefert auch dann ein Systemtaktsignal, wenn einzelne oder mehrere Impulse ausgeblendet oder gestört sind.

Wenn eine Betriebs Taktversorgung und eine Ersatz-Taktversorgung vorgesehen sind, können die resultierenden System-Rahmen-Taktsignale durch gewichtigte Addition zusammengefaßt werden. Dies hat den Vorteil, daß bei Ausfall oder bei Reparatur einer Taktversorgung auch weiterhin ein ungestörter Betrieb möglich ist. Die Phasenverschiebung zwischen beiden System-Rahmen-Taktsignalen muß jedoch < 180° einer System-Taktsignal-Periode sein und notfalls abgeglichen werden.

Ausführungsbeispiele der Erfindung werden anhand von Figuren näher erläutert.

Es zeigen
Figur 1 eine herkömliche Taktversorgung,
Figur 2 eine erfindungsgemäße Taktversorgung,
Figur 3 eine Zusammenfassungsschaltung,
Figur 4 eine Schaltung zur Erzeugung eines Ausblendsignals,
Figur 5 ein zugehöriges Zeitdiagramm,
Figur 6 ein Zeitdiagramm mit weiteren Markierungsmöglichkeiten des Systemtaktsignals,
Figur 7 eine Separationsschaltung,
Figur 8 eine Überwachungsschaltung,
Figur 9 eine Summationsschaltung bei Verwendung einer Betriebs-Taktversorgung und einer Ersatz-Taktversorgung und
Figur 10 ein zugehöriges Zeitdiagramm.

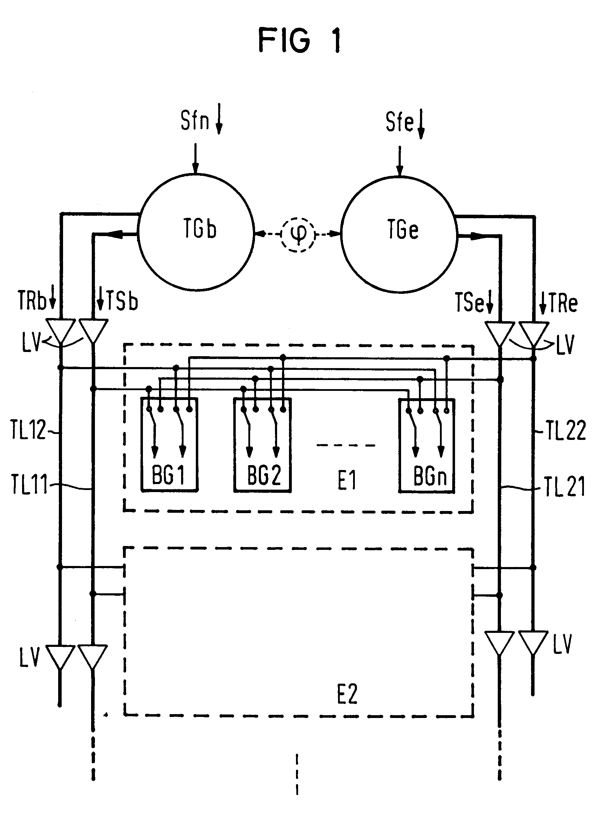

In Figur 1 ist eine bisher übliche Taktversorgung für ein digitales System dargestellt. Ein Betriebs-Taktgenerator TGb, dem gegebenenfalls zur Synchronisierung ein Normalfrequenzsignal Sfn zugeführt wird, liefert ein Betriebs-Systemtaktsignal TSb und ein Betriebs-Rahmentaktsignal TRb. Beide Taktsignale werden über möglichst parallel verlaufende Taktleitungen TL11 und TL12 den Baugruppen BG1 bis BGn von Geräteeinheiten (Einschüben) E1, E2 zugeführt. Von einem Ersatz-Taktgenerator TGe werden entsprechende Ersatz-Taktsignale TSe und TRe über weitere Taktleitungen TL21 und TL22 den Baugruppen BG1 bis BGn zugeführt. Laufzeitprobleme ergeben sich durch Toleranzen von Leitungsververstärkern LV und der Taktleitungen. Bei Systemen mit Ersatz-Taktversorgungen - wie in Figur 1 dargestellt - ergeben sich dieselben Laufzeitprobleme bei der Führung der Ersatz-Taktsignale.

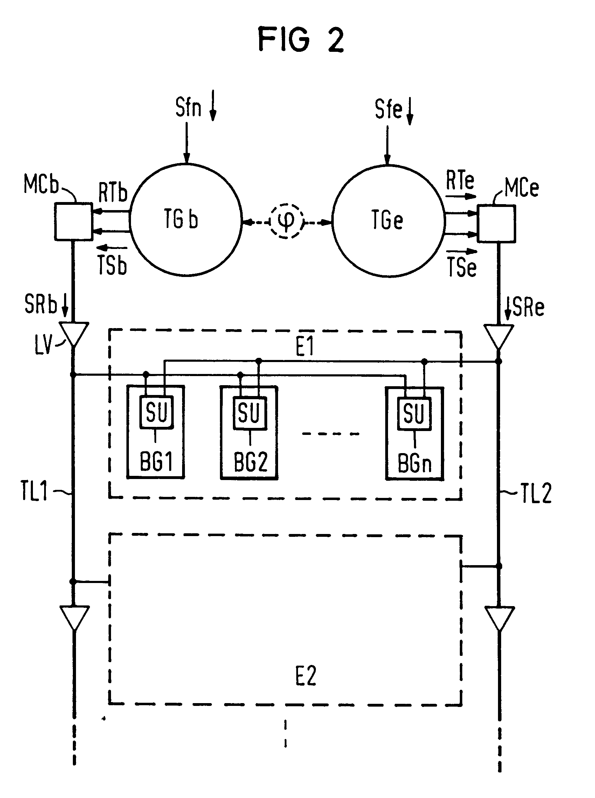

In Figur 2 ist eine erfindungsgemäße Taktversorgung dargestellt. Bei dieser wird das Betriebs-Systemtaktsignal TSb und das Betriebs-Rahmentaktsignal RTb in einer Markierungsschaltung MCb kombiniert. Dies geschieht durch Markierung, d.h. Änderung des Systemtaktsignals bei Auftreten des Rahmentaktsignals, üblicherweise zu Beginn eines Pulsrahmens. Bei dem so gewonnenen und über eine einzige Taktleitung L1 übertragenen Betriebs-System-Rahmen-Taktsignals SRb wirken sich jetzt Laufzeiten und Laufzeitschwankungen gleichmäßig aus. Den Baugruppen BG1 bis BGn wird daher immer ein Systemtaktsignal mit einer phasenstarr zugeordneten Markierung für den Beginn eines Pulsrahmens geliefert.

Die Erfindung ist sowohl für Taktversorgungen mit nur einem Taktgenerator als auch für Taktversorgungen mit einem zusätzlichen Ersatztaktgenerator TGe geeignet, wie in Figur 2 dargestellt. Die Taktsignale des Ersatz-Taktgenerators sind mit dem Buchstaben "e" gekennzeichnet.

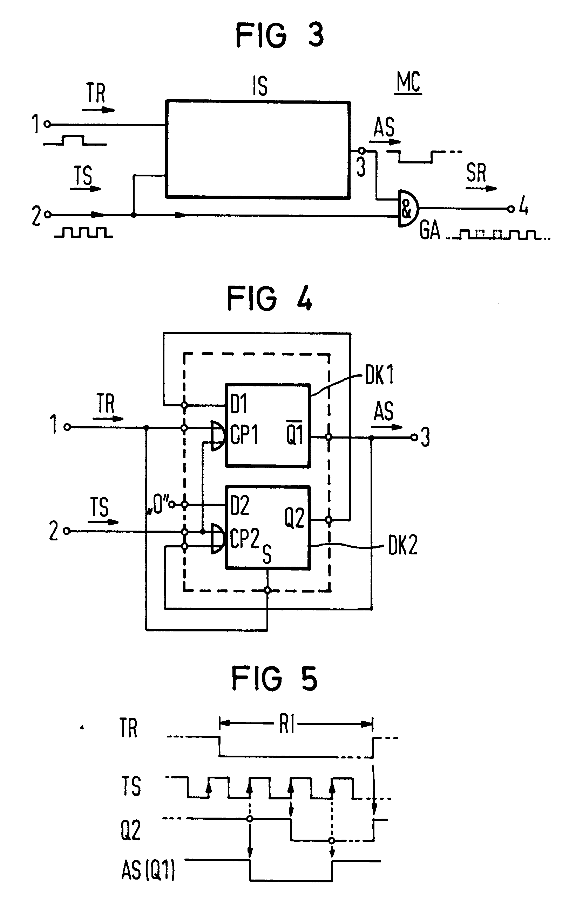

Eine Markierung des Systemtaktsignals TS kann durch Ausblenden eines oder mehrerer Taktimpulse erfolgen. Eine entsprechende Markierungsschaltung MC ist in Figur 3 dargestellt. Einem ersten Eingang 1 einer Impulsschaltung 15 ist das Rahmentaktsignal TR zugeführt. Einem zweiten Eingang 2 das Systemtaktsignal TS. Der Ausgang 3 ist mit einem ersten Eingang eines Gatters GA verbunden, dessen zweitem Eingang das Systemtaktsignal TS zugeführt ist. Am Ausgang 4 des Gatters wird das System-Rahmen-Taktsignal SR abgegeben.

Die Impulsschaltung hat die Aufgabe, den Rahmentaktimpuls RI in einen phasenstarr zu den Impulsen des Systemtaktsignales liegenden Ausblendimpuls AS umzusetzen. Hierdurch wird vermieden, daß die Impulse des Synchrontaktsignales durch den Ausblendimpuls verkürzt werden oder Störimpulse entstehen.

In Figur 4 ist eine mit zwei D-Kippstufen DK1 und DK2 aufgebaute Impulsschaltung dargestellt. Der Dateneingang D1 der ersten D-Kippstufe DK1 ist mit dem Ausgang Q2 der zweiten D-Kippstufe DK2 verbunden. Jede Kippstufe weist einen Takteingang CP1, CP2 auf, dem jeweils ein ODER-Gatter vorgeschaltet ist. Über dieses ODER-Gatter wird dem Takteingang CP1 der ersten Kippstufe DK1 das Rahmentaktsignal TS zugeführt, das gleichzeitig auf den Setzeingang S der zweiten D-Kippstufe DK2 geführt ist. Der invertierende Ausgang Q̅1̅ der ersten D-Kippstufe DK1 bildet den Ausgang der Impulsschaltung. Dieser ist mit dem Takteingang der zweiten D-Kippstufe vorgeschaltete ODER-Gatter verbunden. Das System-Taktsignal TS wird jeweils dem zweiten Eingang der vorgeschalteten ODER-Gatter beider Kippstufen zugeführt. Der Dateneingang D2 liegt auf der logischen Null.

Bei Auftreten eines Rahmentaktimpulses RI (logische Null) des Rahmentaktsignals TR wird der Takteingang CP1 der ersten D-Kippstufe freigegeben. Mit der nächsten positiven Flanke des Systemtaktsignals TS gibt die erste D-Kippstufe DK1 an ihrem Ausgang 3 einen negativen Impuls ab. Hierdurch kann auch die zweite D-Kippstufe DK2 mit der nächsten positiven Flanke getaktet werden, die anschließend ein Zurückstellen der ersten D-Kippstufe DK1 ermöglicht und damit den Ausblendimpuls AS beendet (Figur 5). In entsprechender Weise kann ein Ausblenden von Impulslücken erfolgen, d.h., das Taktsignal bleibt dann auf der logischen 1.

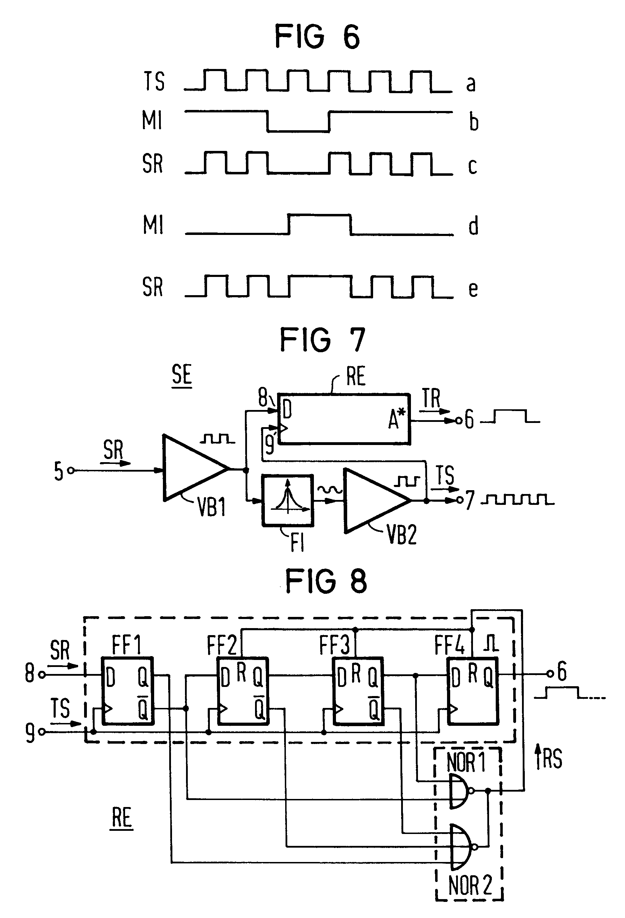

In Figur 6 sind zwei Möglichkeiten zur Markierung dargestellt. Nach 6b wird ein Markierungsimpuls MI erzeugt, der zwei aufeinanderfolgende logische Nullen des Systemtaktsignals TS (6a) umfaßt. Während der Dauer des Rahmenimpulses wird ein Impuls ausgeblendet und die logische Null entsprechend 6c abgegeben. Entsprechend 6d kann der Markierungsimpuls auch zwei positive Impulse des synchronen Taktsignals TS (6a) umfassen. Während deren Dauer wird beispielsweise ein Impuls mit der dreifachen Impulsdauer abgegeben (6e). Während der Dauer der Rahmenimpulse müssen lediglich die entsprechenden logischen Signale an geeignete logische Bauelemente angelegt werden. Eine solche Schaltungsanordnung ist von jedem Fachmann auf die verschiedenartigste Weise leicht realisierbar. Es können natürlich auch Überrahmen- und Unterrahmentaktsignale mit dem Systemtaktsignal TS zusammengefaßt werden.

In Figur 7 ist eine Separationsschaltung SE dargestellt, die das System-Rahmen-Taktsignal SR in das Systemtaktsignal TS und das Rahmentaktsignal TR rückumsetzt. Dem Eingang 5 eines Begrenzerverstärkers VB1 wird das System-Rahmen-Taktsignal SR zugeführt. Der Ausgang des Begrenzerverstärkers ist über eine hier nicht dargestellte Ansteuerungsschaltung mit einem Filter FI verbunden, das zweckmäßigerweise als Schwingkreis ausgeführt ist, der auf die Frequenz des Systemtaktsignals TS abgestimmt ist. Der Filterausgang ist mit dem Eingang eines zweiten Begrenzerverstärkers VB2 verbunden, an dessen Ausgang 7 das Systemtaktsignal TS abgegeben wird. Dieser Ausgang ist mit dem Takteingang 9 einer Rahmenerkennungseinrichtung RE verbunden, deren Dateneingang 8 an den Ausgang des ersten Begrenzerverstärkers VB1 eingeschaltet ist und an deren Ausgang 6 das Rahmentaktsignal TR abgegeben wird.

Durch den Begrenzerverstärker VB1 wird das System-Rahmen-Taktsignal SR zunächst in Rechteckimpulse umgesetzt. Diese steuern das Filter FI an, das lediglich die Frequenz des Systemtaktsignals TS selektiert. Der zweite Begrenzerverstärker VB2 sorgt wieder für die Umwandlung in ein rechteckförmiges Systemtaktsignal TS. Dieses ist phasenverscnoben gegenüber dem vom ersten Begrenzerverstärker VB1 abgegebenen begrenzten System-Rahmen-Taktsignal. Bei einer Markierung durch fehlende Impulse werden diese von der Rahmenerkennungseinrichtung RE in das Rahmentaktsignal TR umgesetzt. Dieses ist zwar gegenüber dem ursprünglichen Rahmentaktsignal phasenverschoben, da es jedoch nur zur Synchronisierung dient, ist dies nicht relevant. Durch den Schwingkreis wird dafür gesorgt, daß im Systemtaktsignal TS keine Lücken entstehen. Das Filter ist immer dann unbedingt erforderlich, wenn Impulse aus- oder eingeblendet werden. Aber auch bei anderen Markierungsarten werden Störungen des Systemtaktsignals durch das Filter vermieden.

In Figur 8 ist eine Rahmenerkennungsschaltung RE (und Überprüfungsschaltung) dargestellt. Sie besteht aus vier D-Kippstufen FF1 bis FF4, die als Schieberegister geschaltet sind, wobei aber der Q̅-Ausgang der ersten D-Kippstufe FF1 mit dem D-Eingang der zweiten D-Kippstufe FF2 verbunden ist. Dem D-Eingang 8 der ersten Kippstufe FF1 wird das System-Rahmen-Taktsignal SR zugeführt, alle Takteingänge 9 sind zusammengeschaltet. An ihnen liegt das Systemtaktsignal TS an. Ein erstes NOR-Gatter NOR 1 ist an den invertierenden Ausgang Q̅ der ersten D-Kippstufe FF1 und den Q-Ausgang der dritten D-Kippstufe FF3 angeschaltet und stellt die letzten drei Kippstufen FF2 bis FF4 mit einem Rücksetzimpuls RS zurück, wenn nur ein einziger Impuls ausgeblendet ist. Ein zweites NOR-Gatter NOR2 ist an die Ausgänge der ersten drei Kippstufen FF1 bis FF3 so angeschaltet, daß die letzten drei Kippstufen zurückgestellt werden, wenn mehr als zwei Impulse ausgeblendet sind. Die Ausgänge beider NOR-Gatter sind über eine Wired-OR-Schaltung verbunden. Entsprechende Rahmenerkennungseinrichtungen und Prüfschaltungen sind natürlich auch für nur einen ausgeblendeten Impuls und für andere Markierungsarten problemlos realisierbar.

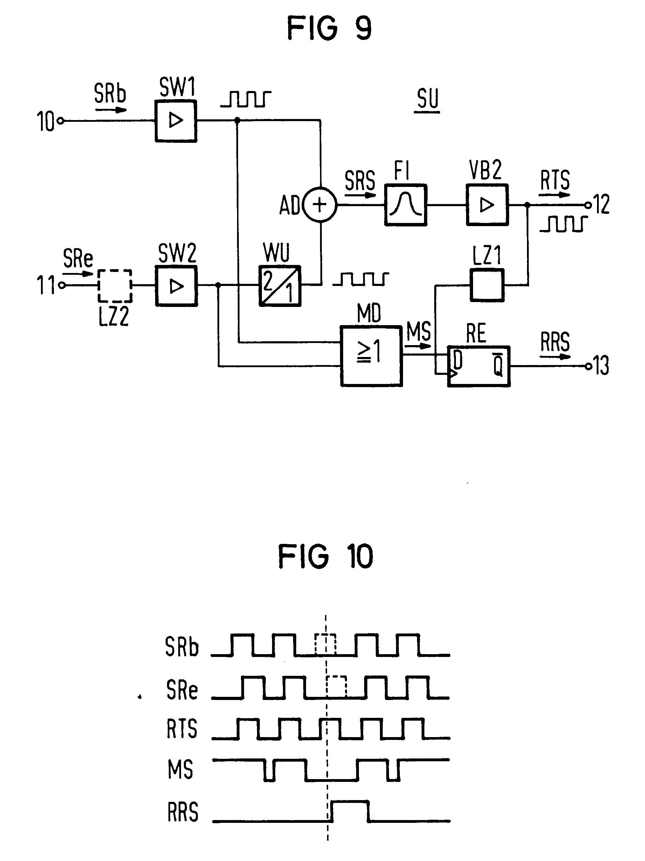

In Figur 9 ist das Prinzipschaltbild einer Summationsschaltung SU dargestellt, die in Figur 2 die bisher übliche Umschalteinrichtung ersetzt. Die Summationsschaltung enthält einen ersten Spektralwandler SW1, dessen Ausgang mit einem ersten Eingang eines Addierers AD verbunden ist Dem Eingang 10 dieses Spektralwandlers wird das Betriebs-System-Rahmentaktsignal SRb zugeführt. Das Ersatz-System-Rahmen-Taktsignal SRe wird von einem Eingang 11 gegebenenfalls über ein Laufzeitglied LZ2 einem zweiten Spektralwandler SW2 zugeführt, dessen Ausgang über einen Spannungswandler WU mit dem zweiten Eingang des Addierers AD verbunden ist. Der Ausgang des Addierers ist an das Filter FI - beispielsweise einen Schwingkreis - geführt, dessen Ausgang in der aus Figur 7 bekannten Weise mit dem zweiten Begrenzerverstärker VB2 verbunden ist, an dessen Ausgang 12 ein resultierendes Systemtaktsignal RTS abgegeben wird.

Die Ausgänge der Spektralwandler SW1 und SW2 sind mit einem Markierungsdetektor MD verbunden, dem sich die Rahmenerkennungseinrichtung RE anschließt. Der Takteingang der Rahmenerkennungseinrichtung ist an den Ausgang 2 des zweiten Begrenzerverstärkers - gegebenenfalls über ein erstes Laufzeitglied LZ1 - angeschaltet.

Durch die Summationsschaltung wird eine bewertete Addition der System-Rahmen-Taktsignale durchgeführt. Dadurch bleibt auch bei einem Phasenunterschied von 180° der System-Rahmen-Taktsignale ein Summensignal vorhanden. Wegen der markierten Rahmenanfänge muß der Phasenunterschied im allgemeinen aber kleiner als 180° sein, damit bei dem Ausfall eines Taktsignals keine Störungen auftreten. Die Summation erfolgt im Beispiel arithmetisch. Es ist aber auch eine logische Verknüpfung (ODER, UND, EX-OR) der System-Rahmen-Taktsignale möglich. Aus dem resultierenden System-Rahmen-Taktsignal SRS wird ein resultierendes System-Taktsignal RTS genommen. Der Markierungsdetektor MD - im Fall der Markierung durch einen ausgeblendeten Impuls ein ODER-Gatter - liefert entsprechend dem Zeitdiagramm Figur 10 ein Markierungssignal MS, das der als Rahmenerkennungeinrichtung RE dienenden D-Kippstufe zugeführt und mit dem resultierenden System-Taktsignal RTS abgetastet wird. Am Ausgang 13 der Rahmenerkennungseinrichtung wird ein resultierendes Rahmen-Taktsignal RRS abgegeben. Bei Ausfall eines System-Rahmen-Taktsignals SRb oder SRe ergeben sich an den Ausgängen der Summationsschaltung lediglich in der Phase geänderte Taktsignale. Großere Phasenabweichungen zwischen den System-Rahmen-Taktsignalen SRb und SRe - beispielsweise durch unterschiedliche Längen der Taktleitungen L1 und L2 verursacht - können durch geeignete Verdrahtung oder ein zweites Laufzeitglied LZ2 vermieden werden, das einem der Spektralwandler vorgeschaltet wird.

## Patentansprüche

1. Taktversorgung für Multiplexsysteme mit mindestens einem Taktgenerator (TG), mit einer Markierungsschaltung (MC), der ein Systemtaktsignal (TS) und ein Rahmentaktsignal (TR) zugeführt werden und die durch eine vom Rahmentaktsignal (TR) gesteuerte Markierung des Systemtaktsignals (TS) ein System-Rahmen-Taktsignal (SR) erzeugt, das auf einer einzigen Taktleitung (TL) Baugruppen (BG1, BF2, ..BGn) zugeführt wird, und
mit mindestens einer Separationsschaltung (SE) in den Baugruppen (BG1, BG2,...), die Mittel zum Trennen von Systemtaktsignal (TS) und Rahmentaktsignal (TR) enthält,
**dadurch gekennzeichnet**,
daß die Markierungsschaltung (MC) Mittel zum Aus- oder Einblenden eines oder mehrerer Impulse des Systemtaktsignals (TS) durch das Rahmentaktsignal (TR) enthält,
daß jede Separationsschaltung (SE) ein als Schwingkreis ausgebildetes Filter (FI) und eine Rahmenerkennungsschaltung (RE) aufweist, denen das System-Rahmen-Taktsignal (SR) zugeführt wird,
daß aus dem Ausgangssignal des Filters (FI) ein regeneriertes Systemtaktsignal (TS) abgeleitet wird und
daß die Rahmenerkennungsschaltung (RE) zur Erkennung eines im System-Rahmen-Taktsignal (SR) markierten Rahmentaktsignals (TR) mindestens eine vom regenerierten Systemtaktsignal (TS) getaktete Kippstufe zur Wiedergewinnung des Rahmentaktsignals (TR) aufweist.

2. Taktversorgung nach Anspurch 1,
**dadurch gekennzeichnet**,
daß in den Baugruppen (BG1, BG2, ...) eine Rahmenerkennungsschaltung (RE) vorgesehen ist, die Mittel zur Überprüfung der Anzahl von aus- oder eingeblendeten Impulsen des Systemtaktsignals (TS) enthält.

3. Taktversorgung nach Anspruch 1 oder 2,
**dadurch gekennzeichnet,**
daß mehrere Rahmentaktsignale (TR) mit dem Systemtaktsignal (TS) zusammengefaßt werden.

4. Taktversorgung nach einem der vorhergehenden Ansprüche,
**dadurch gekennzeichnet**,
daß ein Betriebs-System-Rahmen-Taktsignal (SRb) und ein Ersatz-System-Rahmen-Taktsignal (SRe) erzeugt und über separate Taktleitungen (TL1, TL2) den Baugruppen (BG1, BG2,..) zugeführt werden,
daß in mindestens einer der Baugruppen (BG1, BG2,..) eine Summationsschaltung (SU) vorgesehen ist, die das Betriebs-System-Rahmen-Taktsignal (SRb) und das Ersatz-System-Rahmen-Taktsignal (SRe) durch gewichtete Addition oder durch entsprechende logische Verknüpfung zusammenfaßt und daß die Separationsschaltung (SE) hieraus ein resultierendes Systemtaktsignal (RTS) und ein resultierendes Rahmentaktsignal (RRS) erzeugt.

## Claims

1. Clock supply for multiplex systems having at least one clock generator (TG), having a marking circuit (MC), to which a system clock signal (TS) and a frame clock signal (TR) are fed and which generates a system frame clock signal (SR) by marking, which is controlled by the frame clock signal (TR), of the system clock signal (TS), which system frame clock signal is fed to assemblies (BG1, BG2, ...BGn) over a single clock line (TL), and having at least one separation circuit (SE) in the assemblies (BG1, BG2, ...) which contains means for separating the system clock signal (TS) and the frame clock signal (TR), characterized in that the marking circuit (MC) contains means for blanking or inserting one or more pulses of the system clock signal (TS) by the frame clock signal (TR), in that each separation circuit (SE) has a filter (FI) designed as a resonant circuit and has a frame recognition circuit (RE), to both of which the system frame clock signal (SR) is fed, in that a regenerated system clock signal (TS) is derived from the output signal of the filter (FI), and in that the frame recognition circuit (RE) for recognizing a frame clock signal (TR) marked in the system frame clock signal (SR) has at least one flip-flop, which is clocked by the regenerated system clock signal (TS), for recovering the frame clock signal (TR).

2. Clock supply according to Claim 1, characterized in that a frame recognition circuit (RE), which contains means for checking the number of blanked or inserted pulses of the system clock signal (TS), is provided in the assemblies (BG1, BG2, ...).

3. Clock supply according to Claim 1 or 2, characterized in that a plurality of frame clock signals (TR) are combined with the system clock signal (TS).

4. Clock supply according to one of the preceding claims, characterized in that an operating system frame clock signal (SRb) and a standby system frame clock signal (SRe) are generated and fed to the assemblies (BG1, BG2, ...) via separate clock lines (TL11, TL1), in that a summation circuit (SU), which combines the operating system frame clock signal (SRb) and the standby system frame clock signal (SRe) by weighted addition or by appropriate logic combination, is provided in at least one of the assemblies (BG1, BG2, ...), and in that the separation circuit (SE) generates from this a resultant system clock signal (RTS) and a resultant frame clock signal (RRS).

## Revendications

1. Alimentation en cadence pour des systèmes à multiplexage, comportant au moins un générateur (TG) de cadence, un circuit (MC) de repérage, auquel sont envoyés un signal (TS) de cadence de système et un signal (TR) de cadence de trame et qui produit, par un repérage du signal (TS) de cadence de système, commandé par le signal (TR) de cadence de trame, un signal (SR) de cadence de trame de système, qui est envoyé sur une unique ligne (TL) de transmission de cadence à des groupes (BG1, BG2, ... BGn), et comportant au moins un circuit (SE) de séparation dans les groupes (BG1, BG2, ...) qui contient des moyens pour séparer le signal (TS) de cadence de système et le signal (TR) de cadence de trame,
caractérisée en ce que
le circuit (MC) de repérage comprend des moyens destinés à insérer ou supprimer une ou plusieurs impulsions du signal (TS) de cadence de système par le signal (TR) de cadence de trame,
chaque circuit (SE) de séparation comporte un filtre (FI) ayant la forme d'un circuit résonnant et un circuit (RE) de reconnaissance de trame, auxquels le signal (SR) de cadence de trame de système est envoyé,
un signal (TS) de cadence de système régénéré est obtenu à partir du signal de sortie du filtre (FI) et
le circuit (RE) de reconnaissance de trame destiné à reconnaître un signal (TR) de cadence de trame repéré dans le signal (SR) de cadence de trame de système comporte au moins une bascule cadencée par le signal régénéré (TS) de cadence de système et destiné à réobtenir le signal (TR) de cadence de trame.

2. Alimentation en cadence suivant la revendication 1,
caractérisée en ce que
il est prévu dans les groupes (BG1, BG2, ...) un circuit (RE) de reconnaissance de trame, qui comprend des moyens de vérification du nombre d'impulsions supprimées ou insérées du signal (TS) de cadence de système.

3. Alimentation en cadence suivant la revendication 1 ou 2,
caractérisée en ce que
plusieurs signaux (TR) de cadence de trame sont rassemblés avec le signal (TS) de cadence de système.

4. Alimentation en cadence suivant l'une des revendications précédentes,
caractérisée en ce que
un signal (SRb) de cadence de trame de système de service et un signal (SRe) de cadence de trame de système de remplacement sont produits et sont envoyés, par l'intermédiaire de lignes (TL1, TL2) distinctes de transmission de cadence, aux groupes (BG1, BG2, ...),
il est prévu dans au moins l'un des groupes (BG1, BG2, ...) un circuit (SU) de sommation, qui rassemble le signal (SRb) de cadence de trame de système de service et le signal (SRe) de signal de cadence de trame de système de remplacement par addition pondérée ou par combinaison logique correspondante, et le circuit (SE) de séparation produit, à partir de ces signaux, un signal (RTS) résultant de cadence de système et un signal (RRS) résultant de cadence de trame.
